# EUROPÄISCHE PATENTANMELDUNG

(11) **EP 0 627 800 A1**
(43) Veröffentlichungstag der Anmeldung: **07.12.1994**
(21) Anmeldenummer: 94108056.6
(22) Anmeldetag: 26.05.1994
(51) Int. Cl.: H02B 13/035, H02B 13/045

(54) **Gekapselte gasisolierte Schaltanlage mit Kabelendverschluss**

(30) Priorität: 01.06.1993 DE 4318074
(71) Anmelder: ABB PATENT GmbH, D-68309 Mannheim (DE)
(72) Erfinder: Probst, Heinrich, D-63825 Blankenbach (DE); Neumaier, Heinrich, D-63450 Hanau (DE); Paulsson, Anders, D-63755 Alzenau (DE)
(74) Vertreter: Rupprecht, Klaus, Dipl.-Ing.

(57) **Zusammenfassung**

An einem Flansch (14) eines Gehäuses (10) einer elektrischen Schaltanlage wird ein Gehäuse (16) mit Kabelendverschlüssen angebracht. Das Gehäuse (16) wird in einem solchen Abstand (D) zu dem benachbarten Flansch (14) des Schaltanlagengehäuses (10) vormontiert und ausgerichtet, daß die freien Enden der Kabelleiter in einem Abstand (h) von dem Flansch (14) des Schaltanlagengehäuses entfernt sind. Dadurch ist freie Sicht auf die Kontaktstücke (28, 29) an den Kabelleitern und auf die Gegenkontaktstücke (26) an den Phasenschiebern (24, 25) und freie Zugänglichkeit zu diesen möglich. Nach Kontaktierung der Kontaktstücke (28, 29) mit den Gegenkontaktstücken (26) wird ein im Gehäuse (16) befindliches Rohrstück (30) aus dem Gehäuse herausgezogen und mit einer radialen Umbördelung (31) gegen den benachbarten Flansch (14) des Schaltanlagengehäuses (10) angeschlagen und dort befestigt. Mittels eines an dem schaltanlagenseitigen Flansch (23) des Gehäuses (16) angebrachten Spannflanschring (32) wird das Rohrteilstück (30) fixiert und abgedichtet.

## Beschreibung

Die Erfindung betrifft eine gekapselte gasisolierte Schaltanlage mit einem an einen Flansch eines Schaltanlagengehäuses anflanschbaren Gehäuse eines Kabelendverschlußleiter aufweisenden Kabelendverschlusses, mit an den schaltanlagenseitigen Enden der Kabelendverschlußleiter angebrachten Kontaktstücken, die mit Gegenkontaktstücken an je einem Hochspannungsleiter der Schaltanlage verbindbar sind.

Eine derartige Anordnung ist beispielsweise aus dem ABB-Prospekt DESAN 1013 92 D "SF₆-gasisolierte Schaltanlagen Typ ELKO", Seite 10, Bild 7 bekannt geworden. Das Gehäuse, in dem sich die Kabelendverschlußleiter für die einzelnen Phasen befinden, ist dabei an ein Gehäuse der Schaltanlage unmittelbar angeflanscht, wobei die Kabelendabschnitte in das Gehäuse der Schaltanlage hineinragen. Dadurch ist es bei der Montage erforderlich, daß das Kabelendverschlußgehäuse mit den Kabelendverschlußleitern und das Schaltanlagengehäuse zunächst übereinander angeordnet und sodann gegeneinander bewegt werden müssen, wobei eine Ausrichtung der Kontaktstücke an den den Phasenleitern zu denen an den Kabelendverschlußleitern sowie der beiden Flansche, des Flansches des Kabelendverschlußgehäuses und des Schaltanlagengehäuses, erforderlich ist. Erst dann können entweder das Gehäuse der Schaltanlage abgesenkt oder in seltenen Fällen das Kabelendverschlußgehäuse angehoben und beide Gehäuse an ihren Flanschen miteinander verbunden werden.

Aufgabe der Erfindung ist es, die Schaltanlage der eingangs genannten Art im Bereich des Kabelendverschlußgehäuses so zu verbessern, daß die Montage erheblich vereinfacht ist.

Diese Aufgabe wird erfindungsgemäß dadurch gelöst, daß im Gehäuse des Kabelendverschlusses ein Rohrstück verschiebbar angeordnet ist, welches nach Zuordnung des Kabelendverschlusses zum Kapselungsgehäuse und elektrisch leitender Verbindung der Kontaktstücke mit den Gegenkontaktstücken aus dem Gehäuse ziehbar und am Kapselungsgehäuse befestigbar ist.

Erfindungsgemäß also befinden sich im montierten Zustand die Flansche des Kabelendverschlußgehäuses und des Schaltanlagen- oder Kapselungsgehäuses auf Abstand, wobei die Kontaktstücke und Gegenkontaktstücke so nahe beieinander angeordnet sind, daß sich die Kontaktstücke an den Kabelendverschlußleitern zwar außerhalb der Ebene des benachbarten Flansches des Schaltanlagengehäuses befinden, eine Kontaktierung aber lediglich durch bestimmte Kuppelelemente ermöglicht ist.

Wenn das Rohrstück sich im Inneren des Kabelendverschlußgehäuses befindet, dann kann das Schaltanlagengehäuse über das Kabelendverschlußgehäuse quer zur Mittelachse des Schaltanlagengehäuseflansches gefahren werden, wobei die Kontaktstücke und die Gegenkontaktstücke aufgrund des eben erwähnten Abstandes frei sichtbar und zugänglich sind.

Nach Übereinanderanordnung und Ausrichtung der Kontaktstücke zu den Gegenkontaktstücken und nach elektrischer Kupplung der beiden miteinander wird einfach das Rohrstück aus dem Kabelendverschlußgehäuse herausgezogen und am Flansch des Schaltanlagengehäuses befestigt.

Mittels eines am Kabelendverschlußgehäuse angebrachten oder angeordneten Spannflanschringes zur Fixierung und Abdichtung des Rohrstückes nach dessen Herausziehen ist eine dichte Kapselung erzeugt.

Zur Verbesserung der Dichtungswirkung zwischen dem Rohrstück und dem Spannflanschring ist eine elastische Ringdichtung vorgesehen.

Die Kupplung bzw. elektrisch leitende Verbindung der Gegenkontaktstücke mit den Kontaktstücken erfolgt gemäß kennzeichnenden Merkmalen des Anspruches 4 durch einen Schiebekontakt, der entweder am Gegenkontaktstück oder am Kontaktstück angebracht ist und der axial so weit verschiebbar ist, daß er sowohl das Gegenkontaktstück als auch das Kontaktstück übergreift.

Anstatt eines Schiebekontaktstückes könnte auch ein geteiltes Verbindungsstück vorgesehen werden, welches über das Gegenkontaktstück und das Kontaktstück gelegt und durch entsprechende Verschraubung dort fixiert wird, siehe auch Anspruch 5.

Weitere vorteilhafte Ausgestaltungen und Verbesserungen der Erfindung sind den weiteren Unteransprüchen zu entnehmen.

Mit der erfindungsgemäßen Ausgestaltung wird die Montage eines Gehäuses einer elektrischen Schaltanlage und eines Gehäuses mit Kabelendverschluß erheblich erleichtert. Das Gehäuse des Kabelendverschlusses wird in einem solchen Abstand zu dem benachbarten Flansch des Schaltanlagengehäuses vormontiert und ausgerichtet, daß die freien Enden der Kabelleiter in einem Abstand von dem Flansch des Schaltanlagengehäuses entfernt sind. Dadurch ist freie Sicht auf die Kontaktstücke an den Kabelleitern und freie Zugänglichkeit möglich. Nach Kontaktierung der Kontaktstücke mit den Gegenkontaktstücken wird ein im Gehäuse befindliches Rohrstück aus dem Gehäuse des Kabelendverschlusses herausgezogen und mit einer radialen Umbördelung gegen den benachbarten Flansch des Schaltanlagengehäuses angeschlagen und dort befestigt. Mittels eines an dem schaltanlagenseitigen Flansch des Gehäuses des Kabelendverschlusses angebrachten Spannflanschring wird das Rohrteilstück fixiert und abgedichtet.

Die Erfindung ist anwendbar bei einphasig oder mehrphasig gekapselten Schaltanlagen.

Anhand der Zeichnung, in der ein Ausführungsbeispiel der Erfindung dargestellt ist, sollen die Erfindung sowie weitere vorteilhafte Ausgestaltungen und Verbesserungen der Erfindung näher erläutert und beschrieben werden.

Es zeigen:
- Figur 1: eine Zuordnung von Schaltanlagengehäuse zu Kabelendverschlußgehäuse vor dem endgültigen Zusammenbau und
- Figur 2: die Anordnung nach Figur 1 im zusammenmontierten Zustand.

Ein Schaltanlagengehäuse 10 (kurz auch Gehäuse 10 genannt) einer metallgekapselten, gasisolierten Hochspannungsschaltanlage umgibt Phasenleiter 11, von denen lediglich ein Phasenleiter zu sehen ist. Das Gehäuse 10 besitzt an sich gegenüberliegenden Seiten je einen Anschlußflansch 12, 13, mit denen das Gehäuse 10 mit anderen Schaltanlagengehäusen verbunden werden kann. In einer Ebene senkrecht zu den Ebenen, in denen die Flansche 12 und 13 liegen, befindet sich ein Gehäuseflansch 14, an den ein Kabelendverschluß, der in seiner Gesamtheit mit 15 bezeichnet ist, angeschlossen und angeflanscht werden kann. Der Kabelendverschluß 15 besitzt ein napf- oder topfförmiges Kabelendverschlußgehäuse 16, kurz Gehäuse 16 genannt, dessen eines, dem Gehäuse 10 abgewandten Ende mittels einer Platte 17 verschlossen ist, in der Ausnehmungen 18 vorgesehen sind, durch die Kabelendverschlußgarnituren 19, 20 ins Innere des Gehäuses 16 eingeführt sind; mittels eines an der Garnitur 19 oder 20 befindlichen Flansches 21 wird die Garnitur 19 oder 20 an der Außenseite des Bodens 17 befestigt und dort mittels einer Fixierung 22 gehalten. Die Art und Weise, wie die Garnituren 19 und 20 mit dem Gehäuse 16 verbunden sind, ist für die Erfindung nicht von Bedeutung.

Das Gehäuse 10 besitzt an seinem schaltanlagenseitigen Ende einen Flansch 23, der dem Flansch 14 zugeordnet und an dieses angepaßt ist. Die Garnituren 19 und 20 überragen die Ebene, die durch den Flansch 23 definiert ist, um ein Maß H, was auch der Grund ist, daß eine Montage des Gehäuses 10 quer zur Längsachse des Gehäuses 16 dann nicht möglich ist, wenn die Flansche 14 und 23 unmittelbar miteinander verbunden werden müssen. Die den Flansch 23 überragenden Abschnitte der Garnituren 19 und 20 würden durch Anschlag gegen den Flansch 14 dies behindern.

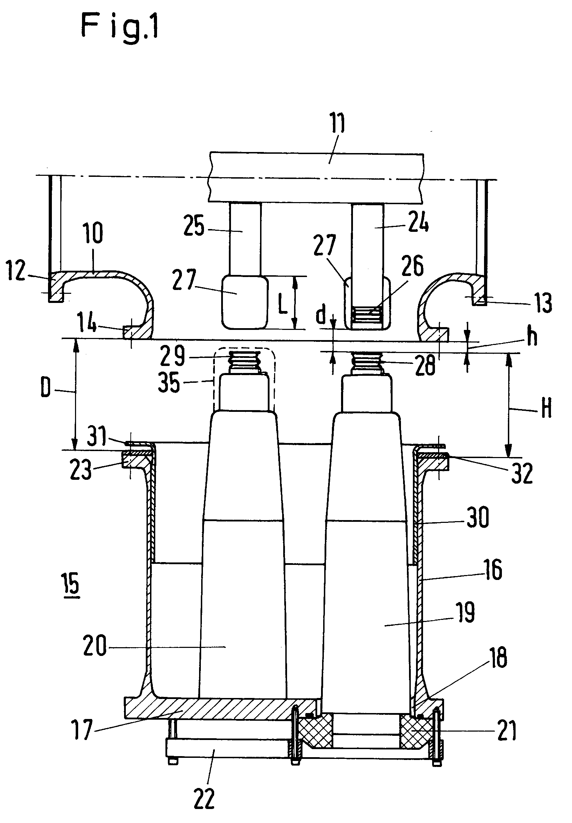

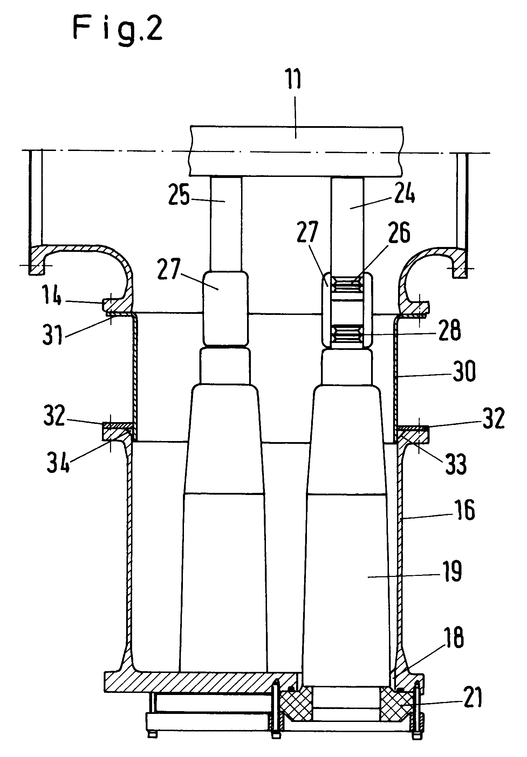

An den Phasenleitern 11 sind Leiterteilstücke 24 und 25 angeschlossen, die senkrecht zu den Phasenleitern 11 verlaufen, deren freie Enden ein Gegenkontaktstück 26 aufweisen, von denen lediglich das Gegenkontaktstück 26 des Leiterteilstücks 24 sichtbar ist. Das Gegenkontaktstück 26 ist von einer Schiebekupplung 27 umgeben, die als Rohrkontakt ausgebildet und im Inneren mit dem Gegenkontaktstück 26 elektrisch leitend kontaktiert ist. Die freien Enden der Garnituren 19 und 20 besitzen entsprechende Kontaktstücke 28 und 29, die im vormontierten Zustand in einem Abstand h unterhalb des Flansches 14 enden. Dadurch kann, wie oben erwähnt, das Gehäuse 10 quer zum Gehäuse 16 über dieses und über die Garnituren 19 und 20 verschoben oder verfahren werden. In diesem vormontierten Zustand beträgt der axiale Abstand der Gegenkontaktstücke 26 von den Kontaktstücken 28, 29 "d". Die Länge L des Rohrkontaktes 27 ist deutlich größer als der Abstand d, so daß, wie aus Figur 2 ersichtlich ist, der Rohrkontakt 27 nach Verschieben über das Kontaktstück 28 bzw. 29 sowohl das Gegenkontaktstück 26 als auch das Kontaktstück 28 bzw. 29 überdeckt und somit eine elektrisch leitende Verbindung zwischen den beiden Kontaktstücken 26 und 28 herstellt. Diese elektrisch leitende Verbindung kann, wie aus Figur 1 ersichtlich ist, einfach hergestellt werden, weil aufgrund des Abstandes D des Gehäuses 16 vom Flansch 14 des Gehäuses 10 ausreichend Platz ist für die Montage bzw. für die Herstellung einer elektrisch leitenden Verbindung zwischen den Kontaktstücken 26 und 28.

Im Inneren des Gehäuses 16, im Bereich des Flansches 23, befindet sich ein die Kabelendverschlußgarnituren 19, 20 umgebendes Rohrstück 30, dessen aus dem Gehäuse 16 herausragendes Ende eine radial nach außen verlaufende Umbördelung 31 aufweist, deren Außendurchmesser etwa dem Außendurchmesser der Flansche 14, 23 entspricht. Unmittelbar auf dem Flansch 23 ist ein Spannflanschring 32 befestigt. Die axiale Länge des Rohrstückes 30 ist größer als der Abstand D.

Wenn sich das Gehäuse 10 mit dem Phasenleiter 11 und den Leiterteilstücken 24 und 25 und das Gehäuse 16 mit den Garnituren 19 und 20 in der in Figur 1 gezeigten Lage befinden, die Flansche 14, 23 miteinander fluchten und die Kontaktstücke zueinander ausgerichtet sind sowie die elektrisch leitende Verbindung durch Verschieben des Kupplungselementes 27 hergestellt ist, wie in Figur 2 dargestellt, dann wird das Rohrstück 30 aus dem Gehäuse 16 herausgezogen und mit seiner Umbördelung 31 gegen den Flansch 14 gelegt und am Flansch 14 festgeschraubt. Mittels des Spannflanschringes 32 und einer nicht näher dargestellten, dazwischen befindlichen Dichtung (siehe weiter unten) wird der Zwischenraum (Spalt) zwischen dem Gehäuse 16 und dem Rohrstück 30 abgedichtet.

Zur Aufnahme einer Dichtung ist im Bereich des Flansches 32 das Gehäuse 16 mit einer konusförmigen Aufweitung 33 versehen. In den Zwischenraum 34 zwischen der kegelförmigen Erweiterung und dem Spannflanschring 32 sowie in dem Rohrstück 30 ist eine nicht näher gezeigte Dichtung eingelegt.

Dadurch, daß das Rohrstück 30 innerhalb des Gehäuses 16 verschiebbar ist, ist eine sog. Quermontage des Gehäuses 10 bezogen auf das Gehäuse 16 ohne weiteres möglich. Die in dem Gehäuse 10 und ggf. zusätzlichen Gehäusebereichen eingebauten Komponenten der Schaltanlage können in der Fabrik montiert und das Gehäuse 10 sowie die zusätzlichen Gehäusebereiche kann auf der Baustelle seitlich, also quer, über das Gehäuse 16 gefahren und danach ausgerichtet werden, so daß eine Kontaktierung der Kontaktstücke 26 und 28 möglich ist.

Mit der Erfindung wird ein weiterer Vorteil noch erreicht:
Dadurch, daß im vormontierten Zustand die Phasenleiter 11 und die Kabelendverschlüsse nicht elektrisch leitend miteinander verbunden sind, können sowohl die Anlage als auch die Kabel unabhängig voneinander geprüft werden. Zu diesem Zweck wäre das Kontaktstück 29 bzw. 28 lediglich noch mit einer Haube 35 zu verschließen, die in Figur 1 bei dem Gegenkontaktstück 29 gestrichelt dargestellt ist. Wenn das Rohrstück 30 aus dem Gehäuse 16 herausgezogen und am Flansch 14 befestigt ist, können die Kabel oder die Schaltanlage getrennt voneinander geprüft werden. Dabei kann die Schaltanlage auch mit SF₆-Gas gefüllt sein. Von besonderem Vorteil ist dies deshalb, da die Kabel mit Gleichspannung geprüft werden und bei der Wechselspannung der Schaltanlage keine Schaltanlagenteile ungeprüft bleiben. Die erfindungsgemäße Ausführung hat noch den weiteren Vorteil, daß radiale Toleranzen oder Versetzungen wegen der leichten Zugänglichkeit der Kontaktstücke ohne weiteres ausgeglichen werden können.

## Patentansprüche

1. Gekapselte gasisolierte Schaltanlage mit einem an einen Flansch eines Schaltanlagengehäuses anflanschbaren Gehäuse eines Kabelendverschlußleiter aufweisenden Kabelendverschlusses, mit an den schaltanlagenseitigen Enden der Kabelendverschlußleiter angebrachten Kontaktstücken, die mit Gegenkontaktstücken an je einem Hochspannungsleiter der Schaltanlage verbindbar sind, dadurch gekennzeichnet, daß im Gehäuse (16) des Kabelendverschlusses ein Rohrstück (30) verschiebbar angeordnet ist, welches nach Zuordnung und Ausrichtung des Kabelendverschlusses zum Schaltanlagengehäuse (10) und nach elektrisch leitender Verbindung der Kontaktstücke (28, 29) mit den Gegenkontaktstücken (26) aus dem Gehäuse (16) herausziehbar und am Schaltanlagengehäuse (10) abgedichtet befestigbar ist.

2. Schaltanlage nach Anspruch 1, dadurch gekennzeichnet, daß am Kabelendverschlußgehäuse (16) an dessen schaltanlagenseitigen Flansch ein Spannflanschring zur Fixierung und Abdichtung des Rohrstückes (30) nach dessen Herausziehen aus dem Kabelendverschlußgehäuse (16) angebracht ist.

3. Schaltanlage nach Anspruch 2, dadurch gekennzeichnet, daß zwischen dem Spannflanschring (32) und dem Rohrstück (30) sowie dem Flansch (23) eine elastische Ringdichtung vorgesehen ist.

4. Schaltanlage nach einem der vorherigen Ansprüche, dadurch gekennzeichnet, daß das Gegenkontaktstück (26) oder das Kontaktstück (28, 29) einen Schiebekontakt (27) aufweist, der durch axiales Verschieben eine elektrisch leitende Verbindung zwischen dem Gegenkontaktstück (26) und dem Kontaktstück (28, 29) herstellt.

5. Schaltanlage nach einem der Ansprüche 1 bis 3, dadurch gekennzeichnet, daß zur elektrisch leitenden Verbindung jedes Gegenkontaktstückes (26) mit dem zugehörigen Kontaktstück (28, 29) ein geteiltes Verbindungsstück vorgesehen ist, das nach Montage beide Kontaktstücke umfaßt und mit diesen verklemmt ist.

6. Schaltanlage nach einem der vorherigen Ansprüche, dadurch gekennzeichnet, daß das Rohrstück (30) an seinem aus dem Kabelendverschlußgehäuse (16) herausragenden Ende eine radiale Umbördelung (31) aufweist, mit der das Rohrstück am benachbarten Flansch (14) des Schaltanlagengehäuses (10) befestigbar ist.

7. Schaltanlage nach einem der vorherigen Ansprüche, dadurch gekennzeichnet, daß das Schaltanlagengehäuse (10) im vormontierten Zustand in einem solchen Abstand (D, h) von dem zugehörigen Flansch des Kabelendverschlußgehäuses (10) entfernt ist, daß die freien Enden der Kabelendverschlußleiter sich in einem Abstand (h) von dem benachbarten Flansch (14) befinden.

8. Schaltanlage nach einem der vorherigen Ansprüche, dadurch gekennzeichnet, daß die Gegenkontaktstücke (26) an an den Phasenleitern (11) anschließenden Leiterteilstücken (24, 25) angeordnet sind.
